# EUROPEAN PATENT SPECIFICATION

(11) **EP 3 054 151 B1**
(45) Date of publication and mention of the grant of the patent: **24.07.2019**
(21) Application number: 16154063.8
(22) Date of filing: 03.02.2016
(51) Int. Cl.: F03D 1/06, F03D 80/30

(54) **WIND POWER GENERATION APPARATUS**
VORRICHTUNG ZUR WINDKRAFTERZEUGUNG
APPAREIL DE PRODUCTION D'ÉNERGIE ÉOLIENNE

(30) Priority: 03.02.2015 JP 2015019509
(43) Date of publication of application: 10.08.2016
(73) Proprietor: Hitachi, Ltd., Tokyo 100-8280 (JP)
(72) Inventor: SHIRAISHI, Takashi, Tokyo, 100-8280 (JP); HASHIMOTO, Takashi, Tokyo, 100-8280 (JP); KATO, Hiroshi, Tokyo, 100-8280 (JP)
(74) Representative: MERH-IP Matias Erny Reichl Hoffmann Patentanwälte PartG mbB

(56) References cited:
- EP-A1- 2 789 851
- WO-A2-2013/097855
- CN-U- 203 098 162
- JP-A- 2004 011 616
- KR-A- 20100 115 139
- US-A1- 2011 110 789

## Description

### BACKGROUND OF THE INVENTION

### FIELD OF THE INVENTION

The present invention relates to a wind power generation apparatus and, more particularly, relates to a wind power generation apparatus provided with a lightning receiving section (tip receptor) in a tip of the blade. A generic wind power apparatus according to the preamble of claim 1 is for instance known from US 2011/0110789 A1.

### BACKGROUND ART

A wind power generation apparatus has an extremely significant risk of undergoing lightning strikes because of the height thereof, and countermeasures against lightning strikes are considered to be important issues. In particular, if a wind turbine is increased in size, since the percentage of lightning damage to a blade is increased, countermeasures against the lightning strikes of the blade are important. Therefore, the countermeasures against the lightning strikes for preventing the lightning strike are performed to the blade by providing a lightning receiving section (tip receptor) in a tip of the blade in addition to the receptor.

A current duration time may be long, and a charge amount may be large in lightning (winter lightning) in winter among lightning. A lightning current of substantially 1,000 Coulombs exceeding a lightning protection level, which is defined by IEC standards, may be observed in the blade due to a lightning strike. Thus, if the measurement of the lightning strike equal to or greater than 1,000 Coulombs that is actually observed is performed, it is possible to suppress blade damage occurring due to winter lightning and also to improve an operation rate of the wind power generation apparatus.

For lightning having a large charge amount, in order not to cause melting, hole opening, and the like to occur, even when the tip receptor receives the lightning strike, it is preferable that a solid receptor is employed among the tip receptors. In addition, from the viewpoint of preventing the lightning strike to the blades other than the receptor by generating the lightning strike in the receptor, the solid receptor easily collects electrons and has effects greater than those of a hollow receptor. Here, a wind turbine blade, in which a receptor is mounted on a tip of the blade, is described, for example, in JP-A-2011-163132. In addition, the wind turbine blade, in which a hollow receptor is mounted on a tip of the blade, is described, for example, in WO 2013/084634 A1.

Mounting of the tip receptor on the blade is performed by providing an anchor section in a lightning receiving section and fixing the anchor section to the tip of the blade in JP-A-2011-163132. In addition, a tip of the anchor section has a tapered shape of which a width is increased toward the tip, the tip is locked to a locking clearance provided in the blade, bonding is performed by adhesive, and then the anchor section is reliably fixed to the blade.

In WO 2013/084634 A1, the solid receptor is not mounted on the blade, but fiber reinforced plastic is fastened to a metal receptor with a bolt in a state where the fiber reinforced plastic forming at least a part of a blade body is at least overlapped with the metal receptor forming the tip of the blade.

The tip receptor receives a centrifugal force according to rotation of the blade. Since the solid receptor is heavier than the hollow receptor and receives a greater centrifugal force, it is important to reliably mount the tip receptor on the blade. In the related art, for example, as described in JP-A-2011-163132, mounting of the tip receptor on the blade is performed by using a locking structure in compliance with shapes of the tip receptor and the tip of the blade or as described in WO 2013/084634 A1, the mounting is performed by using a fastening unit such as the bolt. In the mounting by the locking structure as described in JP-A-2011-163132, in order to perform reliably fixing, adhesive is used and combination of the fastening unit such as the bolt is not performed.

If mounting is performed by using the fastening unit such as the bolt, it is also assumed that a head portion of the bolt become detached due to the lightning strike in the head portion of the bolt. In the mounting by the locking structure in compliance with the shapes of the tip receptor and the tip of the blade, since utilization of the fastening unit such as the bolt is basically not necessary, a problem of damage of the fastening unit such as the bolt does not occur.

US 2011/0110789 A1 discloses a blade having a blade body and a receptor. The receptor is provided on the rear-end side thereof with a joining piece and a clamping wedge. After inserting a bold through an opening, provided in the outer surface of the blade base portion the clamping wedge is moved away from the joining piece such that by clamping the receptor is fixed to the tip of the turbine blade.

A turbine blade having a receptor with an open cell structure is disclosed in EP 2 789 851 A1. The receptor is connected via metal foil provided with the turbine blade to the ground. Further turbine blades having receptors are disclosed in JP 2004 011616 A and WO 2013/097855 A2.

However, according to study of the inventors of the present the invention, also in the mounting by the locking structure in compliance with the shapes of the tip receptor and the tip of the blade, fixing of the tip receptor to the blade is deteriorated due to the lightning strike and the tip receptor may be fallen out from the tip of the blade (moreover, in the technique field, falling-off of the tip receptor due to the lightning strike is often referred to as scattering of the tip receptor). If the damage of the blade such as scattering of the tip receptor occurs due to the lightning strike to the tip receptor, it requires a large amount of time and costs to blade repair and it may cause a significant loss in the costs.

### SUMMARY OF THE INVENTION

An object of the invention is to provide a wind turbine blade and a wind power generation apparatus, in which scattering of a tip receptor due to a lightning strike can be suppressed in a wind power generation apparatus, including the wind turbine blade in which fixing of the tip receptor to a tip of the blade is performed by using a locking structure in compliance with shapes of the tip receptor, and an opening section of the tip of the blade.

In particular, it is provided a wind power generating apparatus having the features defined in claim 1. Further preferred embodiments are defined in the dependent claims.

According to the invention, in the wind turbine blade and the wind power generation apparatus using the wind turbine blade in which fixing of the tip receptor to the blade tip is performed by a locking structure in compliance with the shapes of the tip receptor and the blade tip opening portion, it is possible to effectively suppress scattering of the tip receptor due to the lightning strike.

Problems, configurations, and effects other than the above description will become apparent from the following description of embodiments.

### BRIEF DESCRIPTION OF THE DRAWINGS

Fig. 1 is an explanatory view illustrating a configuration of a wind power generation apparatus (horizontal axis wind turbine) to which the invention is applied.
Fig. 2 is a schematic view of a blade illustrating a configuration example of a wind turbine blade to which the invention is applied.
Fig. 3 is an enlarged view of a tip portion of the wind turbine blade according to an example of the invention and is a view illustrating a structure in which a tip receptor is mounted on a blade tip.
Fig. 4 is an enlarged sectional view of the tip portion of the wind turbine blade according to an example of the invention and is a sectional view that is taken along arrow line IV-IV in Fig. 3.
Fig. 5 is a sectional view of a fastening member that is used for fixing the tip receptor of the wind turbine blade in an example of the invention.
Fig. 6 is an enlarged sectional view of the tip portion of the wind turbine blade according to the example illustrated in Fig. Fig. 4 of the invention and is a sectional view that is taken along arrow line VI-VI in Fig. 3.
Fig. 7 is an enlarged sectional view of the tip portion of the wind turbine blade according to the example illustrated in Fig. 4 of the invention and is a sectional view that is taken along arrow line IV-IV in Fig. 3 in a state where a head portion of a fastening member is removed.
Fig. 8 is an enlarged sectional view of a tip portion of a wind turbine blade according to another example of the invention and is a sectional view that is taken along arrow line IV-IV in Fig. 3.
Fig. 9 is an enlarged sectional view of a tip portion of a wind turbine blade according to an example which is helpful for understanding the present invention and is a sectional view that is taken along arrow line IV-IV in Fig. 3.
Fig. 10 is an enlarged sectional view of the tip portion of the wind turbine blade according to the example illustrated in Fig. 9 of the invention and is a sectional view that is taken along arrow line VI-VI in Fig. 3.
Fig. 11 is an enlarged sectional view of a tip portion of a wind turbine blade according to still another example and is a sectional view that is taken along arrow line IV-IV in Fig. 3. The example shown in Fig. 11 is helpful for understanding the present invention.
Fig. 12 is an enlarged sectional view of a tip portion of a wind turbine blade according to still another example and is a schematic view of a state where an upper surface side of the blade is removed. The example shown in Fig. 12 is helpful for understanding the present invention.
Fig. 13 is a view illustrating a modification example of Fig. 12. The example shown in Fig. 13 is helpful for understanding the present invention.

### DETAILED DESCRIPTION OF THE INVENTION

Hereinafter, examples of the invention will be described with reference to the drawings in detail.

First, circumstances to lead to the invention will be described in detail.

As described above, the invention relates to the wind turbine blade in which fixing of the tip receptor to the blade tip is performed by using the locking structure in compliance with the shapes of the tip receptor and the inner wall of the blade tip opening portion. In the locking structure in compliance with the shapes of the tip receptor and the inner wall of the blade tip opening portion, a portion (blade outer portion) in which the tip receptor is positioned on the outside of the blade tip opening portion and a portion (blade inner portion) in which the tip receptor is inserted into the inside of the blade tip opening portion are provided, and the size of the blade inner portion is greater than that of the inner wall of the blade tip opening portion in the width direction or the thickness direction. Thus, the tip receptor is prevented from physically scattering from the blade tip opening portion. In addition, in such a locking structure, the blade inner portion of the tip receptor and the inner wall of the blade tip opening portion are further fixed by adhesive, it is possible to effectively suppress scattering of the tip receptor from the blade tip opening portion.

However, if moisture such as condensation water is present within the blade, the moisture is evaporated by the lightning, pressure within the blade is increased, and it is said that the blade becomes damaged. If an effect of the locking structure of the tip receptor in the blade tip is considered, it may be estimated that the moisture is evaporated by the lightning, internal pressure is increased, and thereby the blade tip opening portion is opened greater than the size of the blade inner portion of the tip receptor in the width direction or the thickness direction. However, even if the blade tip opening portion is opened, since the inner wall of the blade tip opening portion and a surface of the blade inner portion of the tip receptor are fixed by adhesive, it is conceivable that scattering of the tip receptor is effectively suppressed from the blade tip opening portion. However, it is also estimated that the adhesive is deteriorated by the lightning strike and the effect of the adhesive is absent.

As described above, even if fixing of the tip receptor to the blade tip is performed by using the locking structure in compliance with the shapes of the tip receptor and the blade tip opening portion, and the adhesive, it is difficult to effectively suppress scattering of the tip receptor if deterioration of the locking structure or the adhesive due to the lightning strike occurs. The inventors of the present application perform study whether or not scattering of the tip receptor can be effectively suppressed even if deterioration of the locking structure or the adhesive due to the lightning strike occurs, based on such consideration.

As a result of such consideration, if the tip receptor and the blade are fixed by the fastening unit such as the bolt in addition to the locking structure in compliance with the shapes of the tip receptor and the blade tip opening portion, it is possible to effectively suppress scattering of the tip receptor from the blade tip opening portion by the fastening unit such as the bolt, even if the blade tip opening portion is opened, the locking structure is deteriorated, and the adhesive is deteriorated due to the lightning strike. Here, in the invention, the locking structure in compliance with the shapes of the tip receptor and the blade tip opening portion is a main fixing unit of the tip receptor and the fastening unit such as the bolt is an auxiliary fixing unit of the tip receptor. In other words, even if the fastening unit such as the bolt is not provided, it is possible to fix the tip receptor to the blade tip opening portion by the locking structure in compliance with the shapes of the tip receptor and the blade tip opening portion. If the fastening unit such as the bolt is the main fixing unit of the tip receptor, since there is a concern that detachment of the head of the bolt occur due to the lightning strike, it is conceivable that various considerations are used as the fixing unit or something is taken into consideration when determining how to configure the tip receptor. However, as the invention, if the fastening unit such as the bolt is used as the auxiliary fixing unit of the tip receptor, there is no great hindrance to fixing the tip receptor, for example, even if the head portion of the bolt becomes detached. As described above, the invention can effectively suppress scattering of the tip receptor even if deterioration of the locking structure or the adhesive due to the lightning strike by simultaneously using the fastening unit such as the bolt as the auxiliary fixing unit of the tip receptor and the locking structure in compliance with the shapes of the tip receptor and the blade tip opening portion. In addition, in the invention, since the centrifugal force acting on the tip receptor is also held in the fastening unit such as the bolt in addition to the locking structure or the adhesive, the centrifugal force acting on the tip receptor is dispersed and held, and deterioration suppression of the locking structure or the adhesive can be expected.

Next, embodiments of the invention will be described.

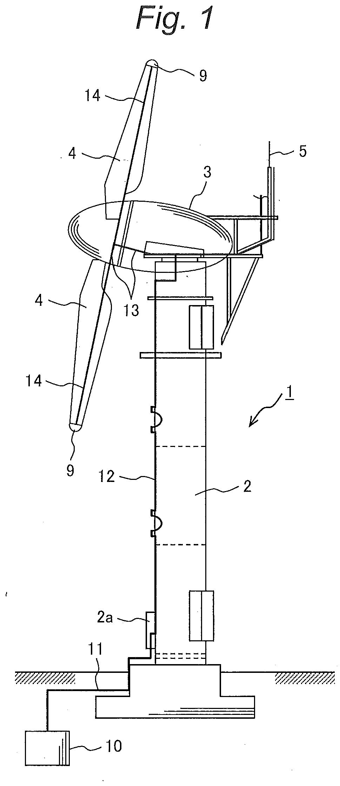

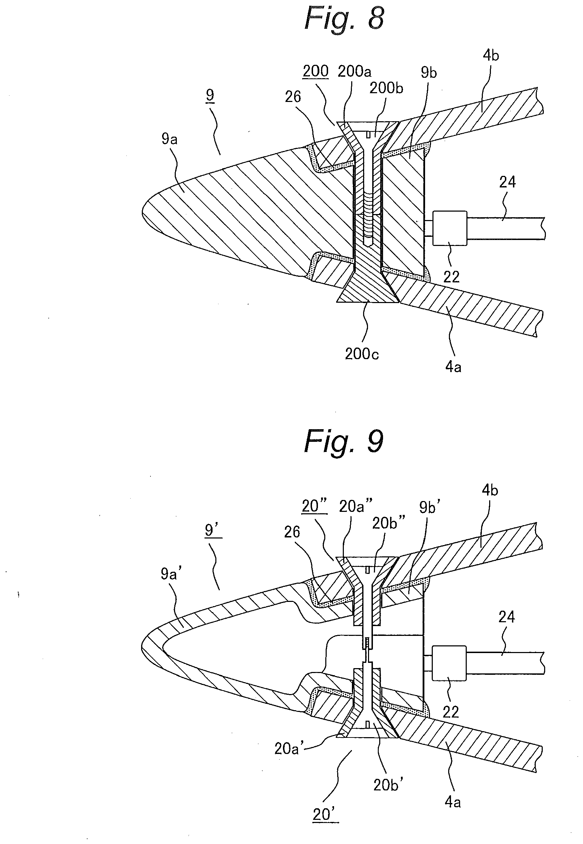

The examples shown in Figs. 1 to 8 are examples in accordance with the present invention, while the examples shown in Figs. 9 to 13 are helpful for understanding the present invention. However, the scope of protection is defined by the claims.

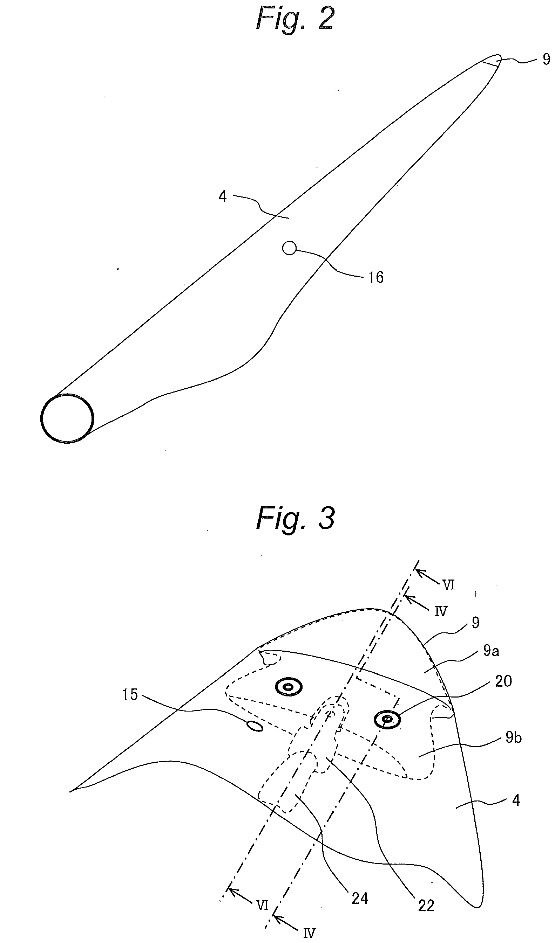

First, a configuration of a horizontal axis wind turbine 1 including blades 4, to which the invention is applied, will be described with reference to Figs. 1 and 2.

As illustrated in Fig. 1, the horizontal axis wind turbine 1 is configured of a tower 2 that is provided on a ground, a nacelle 3 that is mounted on a top portion of the tower 2, the blades 4 that are mounted on a main shaft (not illustrated) on an inside of the nacelle 3, and the like. A generator is connected to the main shaft via a reduction gear and power generation is performed by the generator based on rotation of the blades 4. The blade 4 is configured to include a hull made of fiber-reinforced plastic (FRP) and a main girder (not illustrated) that is disposed on an inside of the hull.

A receptor (lightning receiving section) is provided in the blade 4 as a lightning protection device. The receptor is connected to a grounding electrode by an internal conductor (down conductor) and the internal conductor causes a lightning current to be quickly conducted from the receptor to the grounding electrode. In the example, a tip receptor 9 that is the lightning receiving section is provided in a tip portion of the blade 4. In addition, an intermediate receptor 16 is provided depending on the size of the blade. In addition, in the example, the internal conductor is configured of a grounding lightning conductor 11, an in-tower lightning conductor 12, an in-nacelle lightning conductor 13, and an in-blade lightning conductor 14. In addition, the internal conductor also includes an internal conductor using a structure (configuration member performing a lightning protection function) that is not specially installed for that purpose. The internal conductor is configured of a material or at a thickness in consideration of energy (charge amount) of the lightning. A conductor and the like made of aluminum are used, in addition to a copper wire.

In the ground in the vicinity of an installation portion of the tower 2, as illustrated in Fig. 1, a grounded metal plate 10 is embedded, as a ground pole, and the grounding lightning conductor 11 that is a part of the internal conductor (down conductor) is disposed between the grounded metal plate 10 and a grounded terminal 2a of the tower 2. In addition, as illustrated in Fig. 1, the in-tower lightning conductor 12 that is a part of the internal conductor is disposed on the inside of the tower 2. A lower end of in-tower lightning conductor 12 is connected to the grounded terminal 2a provided in a lower portion of the tower 2 and then in-tower lightning conductor 12 and the grounded metal plate 10 are electrically connected to each other. In addition, an upper end of in-tower lightning conductor 12 is connected to the in-nacelle lightning conductor 13 that is a part of the internal conductor disposed on the inside of the nacelle 3.

As illustrated in Fig. 1, the in-nacelle lightning conductor 13 is disposed on the inside of the nacelle 3. One end of the in-nacelle lightning conductor 13 is connected to in-tower lightning conductor 12 and the other end of the in-nacelle lightning conductor 13 is connected to one end of the in-blade lightning conductor 14 that is a part of the internal conductor disposed on the inside of the blade 4. The other end of the in-blade lightning conductor 14 is connected to a lightning receiving section 9. In addition, if the intermediate receptor 16 is provided, other end of the in-blade lightning conductor 14 is connected to the intermediate receptor 16 in a middle of the in-blade lightning conductor 14. In addition, as illustrated in Fig. 1, a lightning rod 5 is provided in a rear portion of the nacelle 3. The lightning rod 5 is disposed for protecting an anemometer or a vane anemometer from the lightning. The lightning rod 5 is also connected to in-tower lightning conductor 12 via the in-nacelle lightning conductor 13.

If the lightning strikes the tip receptor 9 provided in the blade 4 of the horizontal axis wind turbine 1, a lightning current is induced in the ground successively through the in-blade lightning conductor 14, the in-nacelle lightning conductor 13, in-tower lightning conductor 12, the grounding lightning conductor 11, and the grounded metal plate 10. In addition, if the lightning strikes the lightning rod 5, the lightning current is induced in the ground successively through the in-nacelle lightning conductor 13, in-tower lightning conductor 12, the grounding lightning conductor 11, and the grounded metal plate 10.

Next, a fixing structure of the tip receptor to a tip opening portion of the blade (blade body) 4 will be described in detail with reference to Figs. 3 to 13.

As illustrated in Fig. 3, the tip receptor 9 includes a portion (blade outer portion 9a) that is positioned on an outside of a blade tip opening portion and a portion (blade inner portion 9b) that is inserted into an inside of the blade tip opening portion. In addition, an opening in the blade tip portion is a circular shape opening that is formed in the blade tip by combining two blade surfaces (back-side surface and a front-side surface) having half-divided shapes.

The blade inner portion 9b of the tip receptor 9 is configured to have a portion of which the size is greater than the size of the blade tip opening portion in a width direction (right and left direction in Fig. 3) or a thickness direction (direction substantially intersecting a vertical to a paper surface of Fig. 3). Thus, a so-called locking structure is configured by the shapes of the tip receptor and the blade tip opening portion. In other words, in the locking structure in compliance with the shapes of the tip receptor and the blade tip opening portion, a relationship between the shape of the tip opening portion of the blade 4 and the shape of the blade inner portion 9b of the tip receptor 9 is a relationship where a region in which an inner wall portion of the tip opening portion of the blade 4 and the blade inner portion 9b of the tip receptor 9 are overlapped when viewed from the vertical direction, on a plane surface of the tip opening portion of the blade 4 in a state where the blade inner portion 9b of the tip receptor 9 is mounted on the tip opening portion of the blade 4.

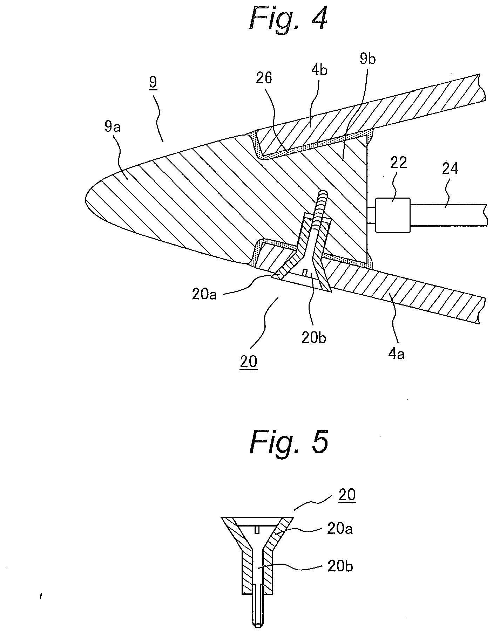

In the example, the blade inner portion 9b of the tip receptor 9 is configured such that the size in the thickness direction (direction substantially intersecting the vertical to the paper surface of Fig. 3) is greater than that of the blade tip opening portion (see Figs. 4 and 6 to 11).

Moreover, in WO 2013/084634 A1, in a region in which the fiber-reinforced plastic and the metal receptor are overlapped, the metal receptor has a region of which a thickness (distance from a surface of a first concave section on a suction surface side to a surface of the first concave section on a pressure surface side) in the first concave section is greater than the interval (from a contact surface of the fiber-reinforced plastic with the metal receptor on the suction surface side to a contact surface of the pressure surface side with the metal receptor) in a tip of the fiber-reinforced plastic, but the configuration of the invention is not suggested. In WO 2013/084634 A1, the metal receptor is also configured to separate a suction-side portion and a pressure-side portion having half-divided shapes into two portions. Furthermore, in WO 2013/084634 A1, in the first concave section of the metal receptor, the fiber-reinforced plastic is positioned so as to cause only the first concave section of the metal receptor to be interposed between two plates thereof on the suction surface side and the pressure surface side, and does not form the blade tip opening portion. Thus, in the configuration of WO 2013/084634 A1, if a bolt fastening the fiber-reinforced plastic and the metal receptor are damaged due to the lightning strike, the metal receptor may be separated from the fiber-reinforced plastic due to rotation or vibration of the vane and it is not said that the locking structure is configured by the shapes of the metal receptor and the fiber-reinforced plastic.

In the example, in addition to the above-described locking structure, the tip portion of the blade 4 and the blade inner portion 9b of the tip receptor 9 are fastened together by using a fastening unit 20 configured of a bolt and the like. A plurality (two in the example) of the fastening units 20 are mounted in a width direction of the blade, side by side. Details of the fastening unit 20 will be described with reference to Figs. 4 to 11.

In addition, a drain hole 15 is formed on an upper surface of the blade 4 on the tip portion side. The drain hole 15 is intended to ensure that water does not accumulate on the inside of the blade in order to prevent an increase of internal pressure due to lightning. Water is drained from the drain hole 15 by a centrifugal force during rotation of the blade 4.

The receptor may be melted by heat when receiving lightning. Thus, a material or a size capable of maintaining sufficient performance is selected in consideration of the temperature increase by heat. In the example, the tip receptor 9 is a solid receptor, a volume is increased, and the tip receptor 9 is configured by using aluminum, copper, or brass having high conductivity. Moreover, the solid receptor is a receptor having no space portion other than a hole for mounting the fastening unit such as the bolt, a hole that is formed for mounting the internal conductor, or the like, and more particularly, in the example, a receptor having no cavity within the blade outer portion 9a of the tip receptor 9 is referred to as the solid receptor. The solid receptor has features of easily collecting electrons, causes the lightning to strike the tip receptor 9, and has a high effect of preventing the lightning from striking blades other than the receptor. In addition, it is preferable that the receptor has as much strength as possible and it is preferable that the receptor is configured as the solid receptor to reduce the risk of a vacant hole without having to be dissolved when receiving the lightning strike. Furthermore, as described below, it is possible to increase heat capacity by making the blade inner portion 9b solid. Thus, it is possible to suppress a rapid increase in temperature on the inside of the receptor due to lightning.

As illustrated in Fig. 4, the blade inner portion 9b of the tip receptor 9 has a spread in a direction toward a base from the blade body tip side and has an abutting surface coming into contact with an inner wall surface of the tip opening portion of the blade 4. The abutting surface referred in here refers a surface on which the inner wall surface of the blade and an outer wall surface of the tip receptor come into close contact with each other. The abutting surface regulates a movement of the blade tip opening portion to the outside (left side in the view) by the inner wall surface of the tip opening portion of the blade 4 and suppresses scattering of the tip receptor 9 from the blade 4. That is, it has a structure in which the tip receptor is not pulled out from the blade tip opening portion as long as a cross section of the blade is not opened.

Furthermore, adhesive 26 is applied between the abutting surface of the blade inner portion 9b of the tip receptor 9 and the inner wall surface of the tip opening portion of the blade 4. The adhesive 26 is provided to reliably fix the blade inner portion 9b of the tip receptor 9 to the inner wall surface of the tip opening portion of the blade 4. An adhering surface has an area of substantially a half of a tip receptor plane and it is preferable that the adhering surface is fixed by an adhesion force to withstand sufficiently the centrifugal force applied to the tip receptor. It is preferable that the additive material referred in here is epoxy resin adhesive using the same epoxy resin as the resin configuring FRP, but other adhesives having a similar adhesion force may be used.

The inner wall surface of the tip opening portion of the blade 4 and the surface of the blade inner portion 9b of the tip receptor 9 may also have a roughness which can generate a frictional force between the blade and the tip receptor. That is, the surface of the blade inner portion 9b is roughened more than the surface of the blade outer portion 9a of the tip receptor 9, the inner wall surface of the tip opening portion of the blade 4 is roughened more than the inner wall surface of the blade of other portions, or both the surface of the blade inner portion 9b and the inner wall surface of the tip opening portion of the blade 4 are roughened more than the surface of the blade outer portion 9a or the inner wall surface of the blade of other portions. Thus, a binding force of the blade with respect to the tip receptor is improved. As a result, the force which separates the surface on which the tip receptor is adhered to the blade by the centrifugal force is weakened, and it is possible to effectively suppress detachment of the tip receptor.

Then, in the example, the tip portion of the blade 4 and the blade inner portion 9b of the tip receptor 9 are fastened together by using the fastening unit 20.

As illustrated in Fig. 5, the fastening unit 20 is configured of a tubular through bolt seat 20a and a bolt 20b that is inserted into the through bolt seat 20a. The bolt 20b is longer than the through bolt seat 20a and the through bolt seat 20a is also referred to as a tubular washer. Such a configuration is provided so as not to retain heat within the fastening unit by increasing the volume of the fastening unit 20. Since it is possible to increase the heat capacity by increasing the volume of the fastening unit 20, if the lightning strikes the fastening unit 20, it is possible to suppress a rapid increase in temperature on the inside of the fastening unit. In addition, as described below, if the fastening unit 20 is made of aluminum, since aluminum has excellent conductivity, it is possible to reduce heating on the inside by a current due to the lightning strike. Furthermore, since aluminum is also excellent in thermal conductivity, it is also possible to quickly disperse heat that is transferred to the inside of the fastening unit due to the lightning strike or heat that is generated on the inside of the fastening unit.

If the fastening unit is configured only by the bolt, it is necessary to increase an outer diameter of the bolt, but it takes cost to form such a large bolt. Then, in the example, a large diameter of the fastening unit 20 and a small diameter of the bolt 20b are realized by configuring the fastening unit 20 with the through bolt seat 20a and the bolt 20b. The fastening unit can be applied to applications other than the wind turbine blade of the invention and it is possible to expect a suppressing effect of falling of the head portion of the bolt due to the lightning strike to the head portion of the bolt.

In the example, for example, the outer diameter of the through bolt seat 20a is 30 mm and the diameter of the bolt 20b is approximately 10 mm. Moreover, in the invention, since the fastening unit 20 is an auxiliary fixing unit of the tip receptor, there is no problem even if the bolt 20b has a small diameter different from using the bolt as a main fixing unit of the tip receptor as described in WO 2013/084634 A1.

The fastening unit 20 may be used to fix the blade 4 and the tip receptor. In addition, the fastening unit 20 may cause corrosion if the fastening unit 20 is a type different from the tip receptor. Thus, it is preferable that the fastening unit 20 is formed by the same material as the tip receptor. If the tip receptor is configured of an aluminum material, it is conceivable that an outside coming into contact with the tip receptor is configured of the aluminum material and an inside is configured of a stainless steel material. If the fastening unit 20 is configured of the through bolt seat 20a and the bolt 20b, it is conceivable that an entirety of the through bolt seat 20a is configured of aluminum, a core of the bolt 20b is configured of the stainless steel material, and the core material is covered by aluminum. According to the configuration, it is possible to realize a light fastening unit 20 having high strength, to reduce the centrifugal force of the fastening unit 20 when the blade is rotated, to reduce a load to the blade, and to reduce a risk of deterioration of the fastening unit 20.

In addition, a head portion of the through bolt seat 20a is formed in a dish shape and the head portion of the bolt 20b is also formed in the dish shape. A dish-shaped counterbore is formed so that an inner wall portion of the head portion of the through bolt seat 20a comes into close contact with the head portion of the bolt 20b. It is possible to configure the head portion of the bolt 20b to be not protrude to the outside and to expect that the lightning prevents the head portion of the bolt from striking by configuring the fastening unit 20 as described above. Then, the head portion of the bolt can come into close contact with the through bolt seat on a wide contact surface by the dish-shaped head portion of the bolt 20b and the dish-shaped counterbore surface of the through bolt seat 20a. Thus, even if the lightning strikes the head portion of the bolt, it is possible to transfer heat due to the lightning strike to the through bolt seat 20a via the wide contact surface. Thus, it is possible to effectively suppress separation of the head of the bolt. Similarly, a counterbore is formed on one surface 4a of the blade 4 so as to come into close contact with the head portion of the through bolt seat 20a. A hole into which a straight portion of the through bolt seat 20a is inserted and a female thread portion screwing with a screw portion of the bolt 20b are formed in the blade inner portion 9b of the tip receptor 9. The inner wall portion of the head portion of the through bolt seat 20a or the counterbore formed in the blade 4 is the dish shape, but may be tubular and is not limited to the dish shape. However, it is preferable to be formed in the dish shape in terms of improvement of close contact with the head portion of the bolt and the like, or the increase in the contact area. In addition, the head portion of the fastening unit 20 (through bolt seat 20a) comes into close contact with the surface of the blade and, as a result, the load to the blade is reduced and it is possible to suppress deterioration of the blade.

In the example illustrated in Fig. 4, the fastening unit 20 is mounted on the one surface 4a of the blade 4, but the fastening unit 20 may be mounted on the other surface 4b, or the fastening units 20 may be mounted on both the one surface 4a and the other surface 4b. In a case where the fastening units 20 are provided on both sides, abnormality occurs in the additive material of the blade and the tip receptor, and even if the upper surface and the lower surface are deviated, the blade and the tip receptor are reliably fixed by the both fastening units and it is possible to effectively suppress that the tip receptor 9 is removed from the tip opening portion of the blade 4.

In addition, a position of the fastening unit 20 is not an end portion that is an edge of the blade or the tip receptor, but is provided on an inside thereof . This is because a fastening force of the fastening unit 20 with respect to a member to be fastened acts on the blade or the tip receptor and there is a risk of damage such as cracks to the blade or the tip receptor.

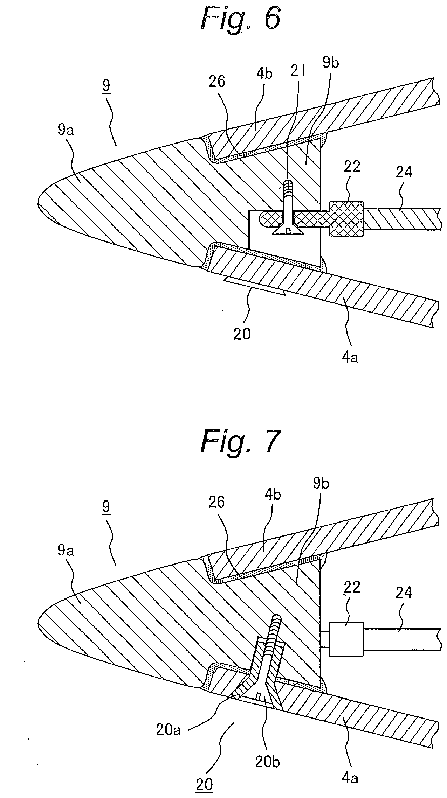

As illustrated in Fig. 6, the in-blade lightning conductor 24 that is a part of the internal conductor is fastened the blade inner portion 9b of the tip receptor 9 by a bolt 21. A terminal 22 is mounted on the in-blade lightning conductor 24 and the terminal 22 is fixed to the blade inner portion 9b of the tip receptor 9 by using the bolt 21. In the example, a conductor made of aluminum is used as the internal conductor. Although aluminum has electric conductivity lower than that of copper, aluminum is a structural lightweight material that is also used for a main structural material. Thus, even if aluminum has a large diameter in order to ensure the same conductivity as copper, since aluminum is a light material, a weight of the wind turbine blade is not increased. Rather coupled with the large diameter, it is possible to make the internal conductor having the strength sufficiently withstand the centrifugal force acting on the tip receptor 9 that is the solid receptor. In the example, the in-blade lightning conductor 24 that is the internal conductor is integrally formed, but may be two portions. It is also possible to easily correspond lightning of which a current duration time is long and a charge amount is great, and to effectively suppress scattering of the tip receptor 9 by the internal conductor by making the in-blade lightning conductor 14 be two portions.

After the tip receptor 9 is mounted on the tip opening portion of the blade 4 by the fastening unit 20, as illustrated in Fig. 7, it is preferable that the head portion of the fastening unit 20 (the through bolt seat 20a) is removed and polished, the head portion of the fastening unit 20 does not protrude from the surface of the blade, and then the surface of the blade tip portion is smoothly formed. Thus, it is possible to expect that the lightning directly striking the fastening unit is reduced without disturbing a flow of air in the blade tip. It is possible to expect efficiency improvement or a noise prevention effect of the wind turbine by suppressing the flow of air in the blade tip. Moreover, when mounting the fastening unit 20 on the blade, the counterbore of the through bolt seat 20a or the head portion of the bolt 20b is configured such that the head portion of the bolt 20b does not protrude to the outside more than the blade surface. Thus, the head portion of the bolt 20b cannot be removed and it is possible to prevent reduction of the strength of the head portion of the bolt. In this regard, it is preferable that it is applied equally to the following examples.

Fig. 8 illustrates another example employing the solid receptor. In the example, a fastening unit 200 is configured of a through bolt seat 200a, a bolt 200b, and a nut 200c. A fastening force is added by the fastening unit 200 from both one surface 4a and the other surface 4b to a blade inner portion 9b of a tip receptor 9 and a blade tip portion. The nut 200c is configured as a cap nut and into which the bolt 200b is screwed. A head portion (portion coming into contact with the blade tip) of the nut 200c is also formed in the dish shape similar to the through bolt seat 200a and a dish-shaped counterbore is formed in the blade tip.

In the example, the through bolt seat 200a, the bolt 200b (core is configured of stainless steel material if necessary), and the nut 200c are configured of aluminum. The through bolt seat 200a, the bolt 200b, and the nut 200c are connected, and thereby spark is not generated between the through bolt seat 200a, the bolt 200b, and the nut 200c.

Moreover, in the example described above, the fastening unit applies the fastening force from both sides in the blade tip to the blade inner portion 9b of the tip receptor 9 and the blade tip portion by using the nut 200c. However, a female screw through which the bolt 200b is screwed may be formed in the blade tip portion on a side opposite to a side on which the blade inner portion 9b of the tip receptor 9, the through bolt seat 200a, and the bolt 200b come into contact with each other by omitting the nut 200c.

In the example, it is possible to expect the following effects by configuring receptor as the solid receptor as described above. That is, it is possible to make receptor to be a light weight by configuring receptor with aluminum. Thus, it is possible to configure the solid receptor to be a receptor of a great volume (for example, approximately 300 cc) so as to also withstand lightning of, for example, a level of 1,500 Coulombs. That is, it is possible to increase in the heat capacity by configuring the receptor to be a great the volume. Thus, it is possible to suppress a rapid increase in a temperature on the inside of the receptor due to the lightning strike. In addition, since aluminum configuring the receptor is also excellent in conductivity, it is possible to also reduce internal heating by the current due to the lightning strike . Furthermore, since aluminum configuring the receptor is also excellent in the thermal conductivity, it is possible to quickly disperse heat transferred to the inside of the receptor due to the lightning strike or heat generated on the inside of the receptor. Thus, it is possible to configure the receptor also withstanding the lightning strike of the level of, for example, 1,500 Coulombs. Then, it is possible to hold the tip receptor in the blade tip opening portion without scattering of the tip receptor even when receiving the lightning strike by configuring the tip receptor as the solid receptor and employing a fixing method of the tip receptor of the invention. Then, it is possible to guide the current due to the lightning strike without fault and, for example, it is possible to realize a lightning device of the blade also withstanding the lightning strike of the level of, for example, 1,500 Coulombs by using an aluminum conductor having a large diameter (approximately ϕ 18 mm) as the internal conductor.

As described above, as measures of lightning having large energy, it is particularly preferable that the solid receptor is employed. Examples which are helpful for understanding the present invention are illustrated in Figs. 9 to 11.

The example is the same as the examples illustrated in Figs. 4 and 6 except that a hollow tip receptor 9' (blade outer portion 9a' and a blade inner portion 9b') is used and two types of a fastening unit 20' and a fastening unit 20" are used as a fastening unit. The description of the same configuration will be omitted. The fastening units 20' and 20" are respectively configured of a through bolt seat 20a' and a bolt 20b', and a through bolt seat 20a" and a bolt 20b". In the example, the fastening unit 20' is mounted on a surface 4a side of the blade 4 and the fastening unit 20" is mounted on a surface 4b side of the blade 4. Both the fastening unit 20' and the fastening unit 20' ' are provided so as to pass through the blade and the tip receptor. Then, the bolt 20b' of the fastening unit 20' and a tip of the bolt 20b" of the fastening unit 20" are configured to be screwed together. Also in the example, it is possible to effectively suppress scattering of the tip receptor from the blade tip opening portion by simultaneously using the fastening unit that is the auxiliary fixing unit of the tip receptor and the locking structure. Moreover, in the example, the fastening units 20' and 20" pass through the blade from both sides in the thickness direction of the blade, the bolts 20b' and 20b" of the fastening units 20' and 20" are connected, and thereby spark is not generated.

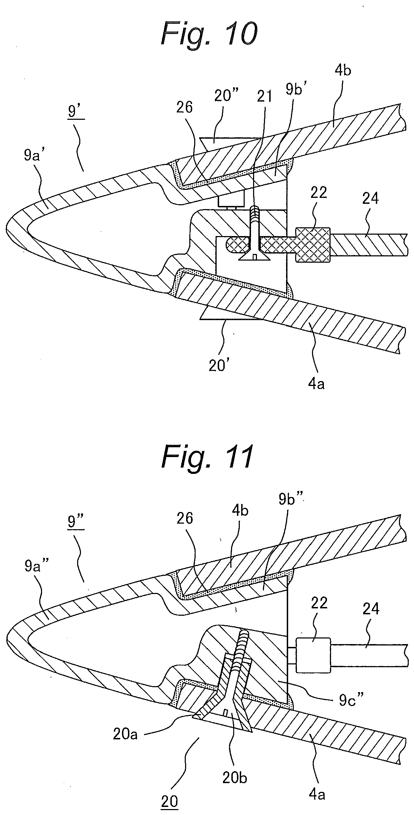

In the examples illustrated in Figs. 9 and 10, the blade inner portion 9b' of the hollow tip receptor 9' is formed in a plate shape, and the fastening units 20' and 20" do not come into contact with the blade inner portion 9b' except a part thereof in a length direction. Thus, the fastening units 20' and 20" cannot disperse and hold the centrifugal force acting on the tip receptor 9'. It is preferable that a portion of the blade inner portion of the tip receptor, on which the fastening unit is mounted, is configured in a block shape without making the portion be a plate shape so as to substantially cover an entirety thereof in the longitudinal direction of the fastening unit. Thus, it is possible to disperse and hold the centrifugal force acting on the tip receptor 9' in the fastening unit.

The configuration is illustrated in Fig. 11. As illustrated in Fig. 11, a part 9c" of a blade inner portion 9b" of a hollow tip receptor 9" is formed in a block shape so as to substantially cover an entirety the fastening unit 20 in the length direction thereof and the fastening unit 20 is mounted on the portion of the block shape. A contact length of the fastening unit 20 (through bolt seat 20a) and the blade inner portion 9b" of the tip receptor 9" is increased by such a configuration and it is possible to disperse and hold the centrifugal force acting on the tip receptor 9" by the fastening unit 20. Thus, the centrifugal force applied to the locking structure or the adhesive 26 is reduced and it is possible to expect that deterioration thereof is effectively suppressed.

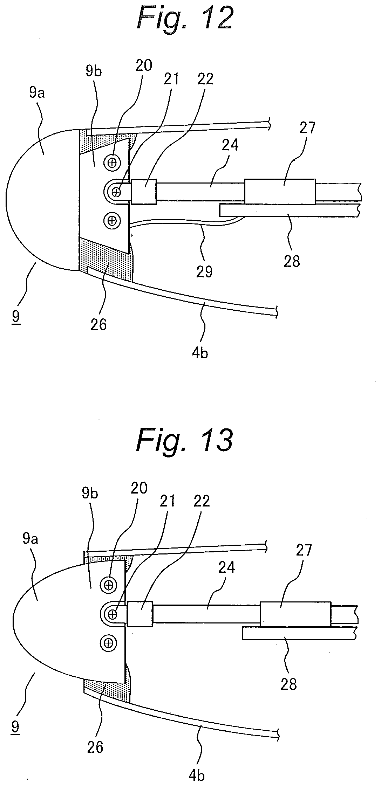

Fig. 12 illustrates a schematic view of a state where one surface 4a of the blade 4 is removed. In Fig. 12, illustration of the adhesive on the blade inner portion 9b of the tip receptor 9 is omitted and the head portion of the bolt is additionally described so as to easily recognize the position of the fastening unit 20 and the like.

In the example illustrated in Fig. 12, the blade inner portion 9b of the tip receptor 9 is formed such that a width thereof is widened toward a base side of the blade. The adhesive 26 substantially defines the width of the blade tip opening portion after the adhesive 26 is cured by filling with the adhesive 26 such as epoxy resin adhesive. Thus, it is also possible to structurally suppress that the blade inner portion 9b of the tip receptor 9 is removed from the blade tip opening portion by the cured adhesive 26. However, it is conceivable that a portion which is not filled with the adhesive 26 may occur, the tip opening portion of the blade 4 is defined by the hull of the blade 4 and it is preferable that removal of the blade inner portion 9b of the tip receptor 9 from the blade tip opening portion is structurally suppressed in a relationship therebetween.

In addition, in the example illustrated in Fig. 12, an in-blade lightning conductor (internal conductor) 24 is mounted on a main girder 28 inserted on an inside of the blade via a fixing member 27. The fixing member 27 is fixed to the main girder 28 by the bolt and the like, and the in-blade lightning conductor (internal conductor) 24 is fixed to the fixing member 27. As described above, if aluminum conductor is used as the internal conductor, it is possible to improve a scattering prevention effect of the tip receptor. Particularly, the aluminum conductor is formed by a rigid body and is formed so as not to stretch. Furthermore, as illustrated in Fig. 12, if the in-blade lightning conductor (internal conductor) 24 connected to the tip receptor 9 via a terminal 22 is fixed to the near fixing member 27, the in-blade lightning conductor (internal conductor) 24 is easily fixed to the fixing member 27 in a state where the aluminum conductor connected to the tip receptor 9 is stretched. As a result, the centrifugal force acting on the tip receptor 9 is easily shared, a force applied to the locking structure or the adhesive due to the centrifugal force acting on the tip receptor 9 can be reduced, and it is also possible to expect that deterioration of the locking structure or the adhesive is suppressed.

In addition, in the example illustrated in Fig. 12, the main girder 28 and the blade inner portion 9b of the tip receptor are connected by using a traction rope 29. Thus, it is possible to further effectively suppress removal of the tip receptor 9 from the blade tip opening portion.

Fig. 13 is a modification example of Fig. 12 and in the modification example, a tip receptor 9 has a semi-circular shape . Also in such a shape, after adhesive 26 is cured, the adhesive 26 substantially defines a width of the tip opening portion of the blade. Thus, it is possible to structurally suppress that the blade inner portion 9b of the tip receptor 9 is removed from the blade tip opening portion by the cured adhesive 26.

Moreover, the invention is not limited to the above-described embodiments and includes various modifications . For example, the above-described embodiments are described in detail to clarify and explain the invention, and are not intended to be necessarily limited to the entire configurations described above. In addition, it is possible to replace a part of the configuration of an embodiment to the configuration of another embodiment and to add the configuration of an example to the configuration of another example. In addition, it is possible to add, delete, and replace another configuration to a part of the configuration of each example.

For example, it is also possible to expect certain effects in a wind power generation apparatus of an upwind type on which a rotor is positioned on an upstream of a nacelle and the wind power generation apparatus is included in the scope of assumption of the invention.

## Claims

1. A wind power generation apparatus (1) comprising:
a wind turbine blade (4) that has a blade body and a receptor (9) mounted on a blade body tip,
wherein the receptor (9) includes a solid blade outer portion (9a) that is positioned on an outside of the blade body tip opening portion and a blade inner portion (9b) that is positioned on an inside of the tip opening portion,
wherein the blade inner portion (9b) includes a portion of which a size in a width direction is greater than a size of an inner wall (4a, 4b) of the blade tip opening portion in the width direction, or of which a size in a thickness direction is greater than a size of an inner wall (4a, 4b) of the blade tip opening portion in the thickness direction,
wherein an internal conductor (24) that is connected to the receptor (9) is provided on the inside of the blade tip opening portion,
**characterized in that**
a fastening unit (20) that fastens the blade inner portion (9b) and the blade body (4) is provided,
wherein a portion of the blade inner portion (9b) of the receptor (9) on which the fastening unit (20) is mounted is formed in a block shape so as to cover the fastening unit (20) in a length direction,
wherein the fastening unit (20) is configured of a tubular through bolt seat (20a) that is housed in a hole formed in the blade body (4) and the blade inner portion (9b) of the receptor (9), and a bolt (20b) that is inserted into the through bolt seat.

2. The wind power generation apparatus (1) according to claim 1,
wherein the blade inner portion (9b) is solid.

3. The wind power generation apparatus according to claim 1 or 2,
wherein the blade tip opening portion is formed in a circular shape in the blade body tip and the blade inner portion (9b) of the receptor is positioned on an inside of the blade tip opening portion of the circular shape.

4. The wind power generation apparatus (1) according to any one of claims 1 to 3,
wherein the blade inner portion (9b) of the receptor (9) is formed to have a spread in a direction toward a base from the blade body tip, and
an inner wall of the blade body tip opening portion is formed so as to come into close contact with the blade inner portion (9b) of the receptor (9).

5. The wind power generation apparatus (1) according to any one of claims 1 to 4,
wherein a portion between the blade inner portion (9b) and an inner wall surface (4a, 4b) of the blade tip opening portion is filled with adhesive (26).

6. The wind power generation apparatus (1) according to any one of claims 1 to 5,
wherein a head portion (20a) of the fastening member (20) is configured such that a portion coming into contact with the blade body (4) is formed in a dish shape, and
wherein a counterbore is formed in the blade body (4) in a portion coming into contact with the head portion (20a) of the fastening unit (20) in a dish shape.

7. The wind power generation apparatus (1) according to claim 6,
wherein the head portion (20a) of the fastening unit (20) is formed so as not to protrude from a surface of the blade body (4).

8. The wind power generation apparatus (1) according to any one of claims 1 to 7,
wherein the fastening unit (20) is mounted on the blade inner portion of the receptor from both sides of a back-side surface and a front-side surface of the blade tip portion.

9. The wind power generation apparatus (1) according to claim 8,
wherein the fastening units (20) that are mounted on the blade inner portion of the receptor (9) from both of the back-side surface and the front-side surface of the blade tip portion are fastened together in the blade inner portion of the receptor (9).

10. The wind power generation apparatus (1) according to any one of claims 1 to 9, wherein a head portion of the bolt (20b) is formed in a dish shape, and
wherein a counterbore is formed in a portion of the through bolt seat that comes into contact with the head portion of the bolt (20b) in a dish shape.

11. The wind power generation apparatus (1) according to any one of claims 1 to 10,
wherein the receptor (9) is configured of aluminum and the fastening unit (20) is configured such that a portion coming into contact with the blade inner portion of the receptor is formed of at least aluminum.

12. The wind power generation apparatus (1) according to any one of claims 1 to 11,
wherein the internal conductor (24) is configured of an aluminum conductor.

13. The wind power generation apparatus (1) according to any one of claims 1 to 12,
wherein the receptor (9) is connected to a grounding electrode (10) via the internal conductor (24).

## Patentansprüche

1. Windkrafterzeugungsvorrichtung (1), die Folgendes umfasst:
ein Windturbinenrotorblatt (4), das einen Rotorblattkörper und einen Rezeptor (9), der an einer Rotorblattkörperspitze montiert ist, besitzt, wobei
der Rezeptor (9) einen festen Rotorblattaußenteil (9a), der an einer Außenseite des Rotorblattkörperspitzenöffnungsteils positioniert ist, und einen Rotorblattinnenteil (9b), der an einer Innenseite des Spitzenöffnungsteils positioniert ist, enthält,
der Rotorblattinnenteil (9b) einen Abschnitt enthält, dessen Größe in einer Breitenrichtung größer als eine Größe einer Innenwand (4a, 4b) des Rotorblattspitzenöffnungsteils in der Breiterichtung ist oder dessen Größe in einer Dickenrichtung größer als eine Größe einer Innenwand (4a, 4b) des Rotorblattspitzenöffnungsteils in der Dickenrichtung ist, und
ein Innenleiter (24), der mit dem Rezeptor (9) verbunden ist, an der Innenseite des Rotorblattspitzenöffnungsteils vorgesehen ist,
**dadurch gekennzeichnet, dass**
eine Befestigungseinheit (20), die den Rotorblattinnenteil (9b) und den Rotorblattkörper (4) befestigt, vorgesehen ist, wobei
ein Abschnitt des Rotorblattinnenteils (9b) des Rezeptors (9), an dem die Befestigungseinheit (20) montiert ist, in einer Blockform gebildet ist, um die Befestigungseinheit (20) in einer Längsrichtung abzudecken, und
die Befestigungseinheit (20) aus einer rohrförmigen Durchgangsbolzenaufnahme (20a), die in einem Loch, das im Rotorblattkörper (4) und im Rotorblattinnenteil (9b) des Rezeptors (9) gebildet ist, untergebracht ist, und einem Bolzen (20b), der in die Durchgangsbolzenaufnahme eingesetzt ist, konfiguriert ist.

2. Windkrafterzeugungsvorrichtung (1) nach Anspruch 1, wobei der Rotorblattinnenteil (9b) fest ist.

3. Windkrafterzeugungsvorrichtung (1) nach Anspruch 1 oder 2, wobei
der Rotorblattspitzenöffnungsteil in der Rotorblattkörperspitze kreisförmig gebildet ist und der Rotorblattinnenteil (9b) des Rezeptors an einer Innenseite des kreisförmigen Rotorblattspitzenöffnungsteils positioniert ist.

4. Windkrafterzeugungsvorrichtung (1) nach einem der Ansprüche 1 bis 3, wobei
der Rotorblattinnenteil (9b) des Rezeptors (9) derart gebildet ist, dass er eine Spreizung in einer Richtung von der Rotorblattkörperspitze zu einer Basis besitzt, und
eine Innenwand des Rotorblattkörperspitzenöffnungsteils derart gebildet ist, dass sie in engen Kontakt mit dem Rotorblattinnenteil (9b) des Rezeptors (9) gelangt.

5. Windkrafterzeugungsvorrichtung (1) nach einem der Ansprüche 1 bis 4, wobei
ein Abschnitt zwischen dem Rotorblattinnenteil (9b) und einer Innenwandfläche (4a, 4b) des Rotorblattspitzenöffnungsteils mit einem Klebstoff (26) gefüllt ist.

6. Windkrafterzeugungsvorrichtung (1) nach einem der Ansprüche 1 bis 5, wobei
ein Kopfteil (20a) des Befestigungselements (20) derart konfiguriert ist, dass ein Abschnitt, der in Kontakt mit dem Rotorblattkörper (4) gelangt, in einer Schüsselform gebildet ist, und
eine Senkung im Rotorblattkörper (4) in einem Abschnitt, der mit dem Kopfteil (20a) der Befestigungseinheit (20) in Kontakt gelangt, in einer Schüsselform gebildet ist.

7. Windkrafterzeugungsvorrichtung (1) nach Anspruch 6, wobei
der Kopfteil (20a) der Befestigungseinheit (20) derart gebildet ist, dass er von einer Oberfläche des Rotorblattkörpers (4) nicht vorsteht.

8. Windkrafterzeugungsvorrichtung (1) nach einem der Ansprüche 1 bis 7, wobei
die Befestigungseinheit (20) auf dem Rotorblattinnenteil des Rezeptors von beiden Seiten einer Rückseitenfläche und einer Vorderseitenfläche des Rotorblattspitzenteils montiert ist.

9. Windkrafterzeugungsvorrichtung (1) nach Anspruch 8, wobei
die Befestigungseinheiten (20), die am Rotorblattinnenteil des Rezeptors (9) sowohl von der Rückseitenfläche als auch der Vorderseitenfläche des Rotorblattspitzenteils montiert sind, im Rotorblattinnenteil des Rezeptors (9) aneinander befestigt sind.

10. Windkrafterzeugungsvorrichtung (1) nach einem der Ansprüche 1 bis 9, wobei
ein Kopfteil des Bolzens (20b) in einer Schüsselform gebildet ist und
eine Senkung in einem Abschnitt der Durchgangsbolzenaufnahme, der mit dem Kopfteil des Bolzens (20b) in Kontakt gelangt, in einer Schüsselform gebildet ist.

11. Windkrafterzeugungsvorrichtung (1) nach einem der Ansprüche 1 bis 10, wobei
der Rezeptor (9) aus Aluminium konfiguriert ist und die Befestigungseinheit (20) derart konfiguriert ist, dass ein Abschnitt, der mit dem Rotorblattinnenteil des Rezeptors in Kontakt gelangt, mindestens aus Aluminium gebildet ist.

12. Windkrafterzeugungsvorrichtung (1) nach einem der Ansprüche 1 bis 11, wobei
der Innenleiter (24) aus einem Aluminiumleiter konfiguriert ist.

13. Windkrafterzeugungsvorrichtung (1) nach einem der Ansprüche 1 bis 12, wobei
der Rezeptor (9) mittels des Innenleiters (24) mit einer Erdungselektrode (10) verbunden ist.

## Revendications

1. Appareil de génération d'énergie éolienne (1) comprenant :
une pale de turbine éolienne (4) qui comporte un corps de pale et un récepteur (9) monté sur un bout du corps de pale,
dans lequel le récepteur (9) inclut une portion extérieure de pale pleine (9a) qui est positionnée sur un extérieur de la portion d'ouverture du bout du corps de pale et une portion intérieure de pale (9b) qui est positionnée sur un intérieur de la portion d'ouverture du bout,
dans lequel la portion intérieure de pale (9b) inclut une portion dont une taille dans une direction en largeur est plus grande qu'une taille d'une paroi intérieure (4a, 4b) de la portion ouverte du bout de pale dans la direction en largeur, ou dont une taille dans une direction en épaisseur est plus grande qu'une taille d'une paroi intérieure (4a, 4b) de la portion ouverte du bout de pale dans la direction en épaisseur,
dans lequel un conducteur interne (24) qui est connecté au récepteur (9) est prévu à l'intérieur de la portion ouverte du bout de pale,
**caractérisé en ce que**
il est prévu une unité de fixation (20) qui fixe la portion intérieure de la pale (9b) et le corps de pale (4),
dans lequel une portion de la portion intérieure de pale (9b) du récepteur (9) sur laquelle l'unité de fixation (20) est montée est formée sous la forme d'un bloc de manière à couvrir l'unité de fixation (20) dans une direction en longueur,
dans lequel l'unité de fixation (20) est configurée d'un siège tubulaire pour boulon traversant (20a) qui est logé dans un trou formé dans le corps de pale (4) et dans la portion intérieure de pale (9b) du récepteur (9), et d'un boulon (20b) qui est introduit dans le siège pour boulon traversant.

2. Appareil de génération d'énergie éolienne (1) selon la revendication 1, dans lequel la portion intérieure de pale (9b) est pleine.

3. Appareil de génération d'énergie éolienne selon la revendication 1 ou 2, dans lequel la portion ouverte du bout de pale est formée sous une forme circulaire dans le bout du corps de pale et la portion intérieure de pale (9b) du récepteur est positionnée sur un intérieur de la portion ouverte du bout de pale de la forme circulaire.

4. Appareil de génération d'énergie éolienne (1) selon l'une quelconque des revendications 1 à 3,
dans lequel la portion intérieure de pale (9b) du récepteur (9) est formée pour avoir une forme qui s'étale dans une direction vers une base depuis le bout du corps de pale, et
une paroi intérieure de la portion ouverte du bout de corps de pale est formée de manière à venir en contact intime avec la portion intérieure de pale (9b) du récepteur (9).

5. Appareil de génération d'énergie éolienne (1) selon l'une quelconque des revendications 1 à 4,
dans lequel une portion entre la portion intérieure de pale (9b) et une surface de paroi intérieure (4a, 4b) de la portion d'ouverture du bout de pale est remplie avec un adhésif (26).

6. Appareil de génération d'énergie éolienne (1) selon l'une quelconque des revendications 1 à 5,
dans lequel une portion de tête (20a) de l'élément de fixation (20) est configurée de telle façon qu'une portion venant en contact avec le corps de pale (4) est formée sous la forme d'une coupelle, et
dans lequel un contre perçage est formé dans le corps de pale (4) dans une portion venant en contact avec la portion de tête (20a) de l'unité de fixation (20) sous la forme d'une coupelle.

7. Appareil de génération d'énergie éolienne (1) selon la revendication 6, dans lequel la portion de tête (20a) de l'unité de fixation (20) est formée de manière à ne pas se projeter depuis une surface du corps de pale (4).

8. Appareil de génération d'énergie éolienne (1) selon l'une quelconque des revendications 1 à 7,
dans lequel l'unité de fixation (20) est montée sur la portion intérieure de pale du récepteur depuis les deux côtés d'une surface côté dorsal et d'une surface côté frontal de la portion du bout de pale.

9. Appareil de génération d'énergie éolienne (1) selon la revendication 8, dans lequel les unités de fixation (20) qui sont montées sur la portion intérieure de pale du récepteur (9) à la fois depuis la surface côté dorsal et depuis la surface côté frontal de la portion du bout de pale sont fixées ensemble dans la portion intérieure de pale du récepteur (9).

10. Appareil de génération d'énergie éolienne (1) selon l'une quelconque des revendications 1 à 9,
dans lequel une portion de tête du boulon (20b) est formée sous la forme d'une coupelle, et
dans lequel un contre perçage est formé dans une portion du siège pour boulon traversant qui vient en contact avec la portion de tête du boulon (20b) sous la forme d'une coupelle.

11. Appareil de génération d'énergie éolienne (1) selon l'une quelconque des revendications 1 à 10,
dans lequel le récepteur (9) est configuré en aluminium et l'unité de fixation (20) est configurée de telle façon qu'une portion venant en contact avec la portion intérieure de pale de récepteur est formée au moins en aluminium.

12. Appareil de génération d'énergie éolienne (1) selon l'une quelconque des revendications 1 à 11,
dans lequel le conducteur interne (24) est configuré par un conducteur en aluminium.

13. Appareil de génération d'énergie éolienne (1) selon l'une quelconque des revendications 1 à 12,
dans lequel le récepteur (9) est connecté à une électrode de mise à la terre (10) via le conducteur interne (24).
